# EUROPEAN PATENT APPLICATION

(11) **EP 4 442 479 A1**
(43) Date of publication of application: **09.10.2024**
(21) Application number: 22896182.7
(22) Date of filing: 07.11.2022
(51) Int. Cl.: B60H 1/32, B60H 1/00, B60P 3/20, B60L 50/60, B60L 58/12

(54) **CONTROL METHOD OF ELECTRIC TRUCK HAVING COLD CHAIN REFRIGERATION SYSTEM POWERED BY HIGH VOLTAGE DRIVING BATTERY**

(30) Priority: 22.11.2021 KR 20210161601
(71) Applicant: EV&Solution Co., Ltd., Gunsan-si, Jeollabuk-do 54150 (KR)
(72) Inventor: MIN, Won Ki, Seoul 04421 (KR); GOO, Yeong Seo, Seoul 07622 (KR)
(74) Representative: Frenkel, Matthias Alexander
(86) International application number: PCT/KR2022/095151
(87) International publication number: WO 2023/090985

(57) **Abstract**

The present invention relates to a control method of an electric truck, wherein a single battery is used to simultaneously supply electrical power to: a drive motor for driving the vehicle; and a refrigeration system for supplying cold air to a cargo compartment. In particular, a control method of an electric truck having a cold chain refrigeration system driven by a high-voltage driving battery according to the present invention comprises the steps of: monitoring vehicle state information and cargo compartment state information; receiving destination information; calculating the distance that can be traveled while operating the refrigeration system; and selectively operating the refrigeration system by comparing the remaining distance to the destination and the calculated distance that can be traveled while operating the refrigeration system.

## Description

### [Technical Field]

The present invention relates to a control method of an electric truck having a cold chain refrigeration system powered by a high-voltage driving battery. More specifically, the present invention relates to a control method of an electric truck which can stably operate a cold chain refrigeration system and improve the energy efficiency of the vehicle using a high-voltage battery for driving the electric truck.

### [Background Art]

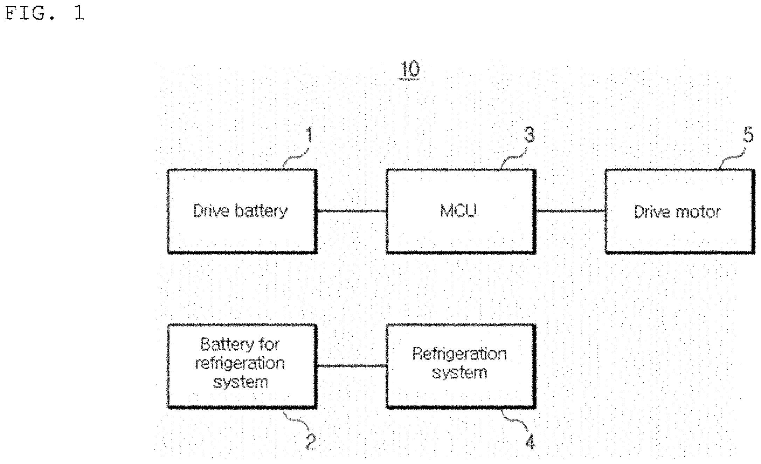

A cold chain refers to a low-temperature distribution system which maintains freshness and quality by keeping a temperature low during the storage and transport of fresh food, such as agricultural products, from production sites to the final consumption site after harvest. A truck equipped with a cold chain refrigeration system is used in the cold chain distribution system, and FIG. 1 is a system block diagram of a conventional electric truck equipped with a cold chain refrigeration system.

As illustrated in FIG. 1, the conventional electric truck 10 includes not only a driving battery 1 for driving a vehicle but also a battery 2 for driving a refrigeration system. That is, it is general that the driving battery 1 for supplying electric power to a driving motor 5 through a Motor Control Unit(MCU) 3 of the electric truck 1 is mounted on the vehicle, and then, the battery 2 for driving a refrigeration system 4 is additionally mounted. However, in this case, there is a disadvantage in that the driving battery 1 and the battery 2 for the refrigeration system must be separately charged and managed. Furthermore, since additional costs for installing the battery 2 for the refrigeration system are generated, it imposes an economic burden on a driver, and an increase of vehicle weight reduces fuel efficiency.

Meanwhile, to address the above problems, an electric vehicle which simultaneously drives both a driving motor and the refrigeration system using a single battery has been proposed. However, because the driving motor typically operates at high-voltages above 300V, a transformer for operating a low-voltage refrigeration system must be essentially provided, and significant power loss may be incurred during the transformation process. In addition, the driving motor and the refrigeration system share one battery, but the driving of the vehicle and the operation of the refrigeration system are not organically controlled with each other.

### [Disclosure]

### [Technical Problem]

An objective of the present invention is to provide a control method of an electric truck, which can simultaneously drive a driving motor and a refrigeration system using a single high-voltage battery, and minimize power loss even without a transformer.

Another objective of the present invention is to provide a control method of an electric truck which can organically control the driving of a vehicle and the operation of a refrigeration system depending on the charge state of the battery.

However, the objectives of the present invention are not limited to those described above, and can be extended in various ways without departing from the spirit and range of the present invention.

### [Technical Solution]

To achieve the above objectives of the present invention, there is provided a control method of an electric truck having a cold chain refrigeration system according to exemplary embodiments including operations of: monitoring state information of the vehicle and state information of the cargo compartment; receiving destination information; calculating a movable distance with the refrigeration system operating; and selectively operating the refrigeration system by comparing the remaining distance to the destination with the calculated movable distance with the refrigeration system operating.

In this case, the operation of selectively operating the refrigeration system includes: continuously operating the refrigeration system if the remaining distance to the destination is less than the calculated movable distance with the refrigeration system operating.

Conversely, if the remaining distance to the destination is greater than the calculated movable distance with the refrigeration system operating, the operation of selectively operating the refrigeration system includes: determining whether it is possible to travel to a preset turnaround point with the refrigeration system operating; and displaying a turnaround warning to a driver if it is possible to travel to the turnaround point.

In an embodiment, if it is impossible to travel to the turnaround point, the control method further includes operations of: calculating the time to operate the refrigeration system during the travel to the turnaround point; and stopping the operation of the refrigeration system after the calculated time has elapsed.

In another embodiment, if it is impossible to travel to the turnaround point, the control method further includes operations of: calculating the time to operate the refrigeration system during the travel to the turnaround point; and repeating turning on and turning off the refrigeration system until arrival at the turnaround point.

Meanwhile, the turnaround point is any one among a place previously set by the driver through a route guidance terminal, a previous destination set before the current destination, and the nearest charging station.

The operation of monitoring state information of the vehicle and state information of the cargo compartment includes: acquiring driver's requested torque information and charge state information of the battery; and acquiring temperature and humidity information of the cargo compartment.

Moreover, the operation of receiving destination information includes: receiving departure information, destination information, distance information from the departure point to the destination, estimated travel time, travel route, and traffic condition information.

In addition, the operation of selectively operating the refrigeration system includes: supplying power at the same voltage to both the driving motor and the refrigeration system. For instance, the voltage supplied to the driving motor and the refrigeration system is 330V.

### [Advantageous Effects]

The control method of the electric truck having the cold chain refrigeration system according to exemplary embodiments of the present invention can directly use the power of the high-voltage battery without a transformer, thereby minimizing power loss that can occur during the transformation process.

Furthermore, the control method of the electric truck having the cold chain refrigeration system according to exemplary embodiments of the present invention can organically control the driving of the vehicle and the operation of the refrigeration system depending on the distance to the destination and the state of charge of the battery, thereby stably controlling the electric truck having the cold chain refrigeration system driven only by the single battery.

### [Description of Drawings]

FIG. 1 is a block diagram illustrating a conventional electric truck having a cold chain refrigeration system.
FIG. 2 is a block diagram illustrating an electric truck having a cold chain refrigeration system according to the present invention.
FIG. 3 is a flowchart for depicting a control method of an electric truck having a cold chain refrigeration system powered by a high-voltage driving battery according to the present invention.

### [Mode for Invention]

With respect to embodiments of the present invention, specific structural and functional descriptions are just illustrated to describe embodiments of the present invention, so embodiments of the present invention can be realized in various forms and are not limited to the embodiments described herein.

The example embodiments of the present invention are capable of various modifications and alternative forms, and particular embodiments of the present invention will be illustrated in the attached drawings and described in this specification in detail. It should be understood, however, that there is no intent to limit example embodiments of the invention to the particular forms disclosed, but on the contrary, example embodiments of the invention are to cover all modifications, equivalents, and alternatives falling within the technical idea and scope of the present invention.

It will be understood that terms, such as "first" or "second" may be used in the specification to describe various components but are not restricted to the above terms. The terms may be used to discriminate one component from another component. For instance, the first component may be named as the second component, and on the contrary, the second component may be also named as the first component within the scope of the present invention.

It should be understood that when a component is referred to as being "connected" or "coupled" to another component, it may be directly connected or coupled to the other component, but it should be understood that there may be other components therebetween. On the other hand, when a component is referred to as being "directly connected" or "directly coupled" to another component, it should be understood that there is no other component therebetween. Other expressions for describing the relationship between the components, that is, the expression "between" and "directly between" or "adjacent to" and "directly adjacent to" should be interpreted in the same manner.

The terms used in the following description are intended to merely describe specific embodiments, but not intended to limit the invention. An expression of the singular number includes an expression of the plural number, so long as it is clearly read differently. The terms such as "include" and "have" are intended to indicate that features, numbers, steps, operations, elements, components, or combinations thereof used in the following description exist and it should thus be understood that the possibility of existence or addition of one or more other different features, numbers, steps, operations, elements, components, or combinations thereof is not excluded.

Unless otherwise defined, all terms including technical and scientific terms used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Hereinafter, preferred embodiments of the present invention will be given with reference to the accompanying drawings. The same reference numerals will be used for the same components in the drawings, and descriptions of repeated components will be omitted.

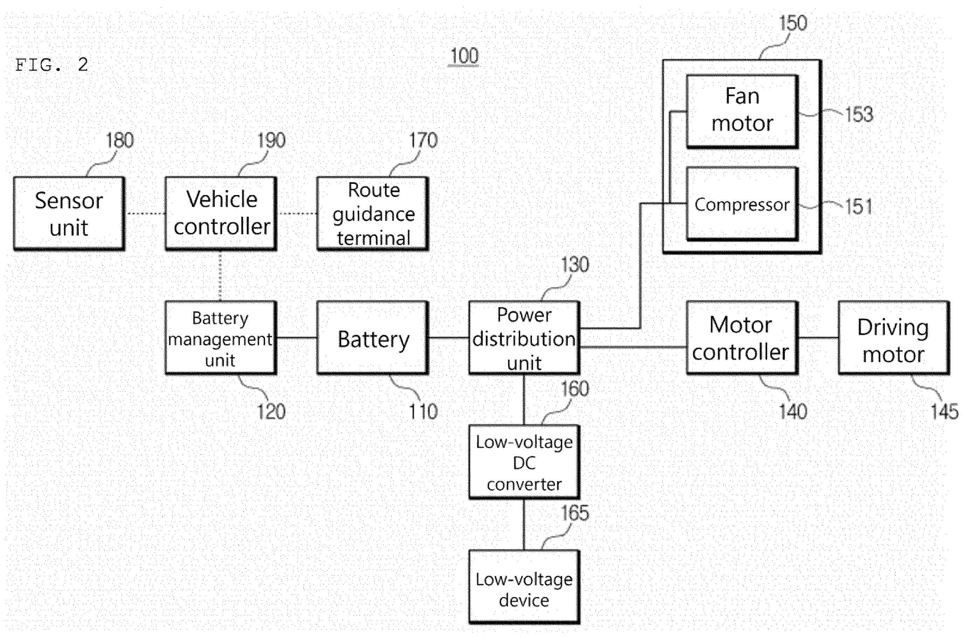

Referring to FIG. 2, an electric truck which is a control subject of the present invention, will be described. FIG. 2 is a block diagram illustrating an electric truck having a cold chain refrigeration system according to the present invention.

Here, an electric truck refers to a truck that is driven using electrical energy charged in a battery instead of burning fossil fuels. Additionally, the truck means a vehicle intended for transporting goods, but in the present invention, only a truck having a refrigeration system for transporting fresh food will be described.

As illustrated in FIG. 2, the electric truck 100 includes: a battery 110 for storing electrical energy; a battery management unit 120 for managing the state of charge of the battery 110; a power distribution unit 130 for distributing electrical energy of the battery 110; a motor controller 140 for controlling a driving motor 145; a refrigeration system 150 for supplying cold air to maintain the freshness of the fresh food loaded in a cargo compartment; a low-voltage DC converter 160 for converting high-voltage current of the battery 110 to low-voltage to supply the converted low-voltage current to low-voltage devices 165; a route guidance terminal 170 for providing a travel route and driving information of a vehicle to the driver; a sensor unit 180 for monitoring the temperature in the cargo compartment; and a vehicle controller 190 for controlling the operation of the vehicle.

The battery 110 stores electrical energy supplied from an external source and can supply the electrical energy to the driving motor 145, the refrigeration system 150, and other devices. Particularly, to drive the driving motor 145, the battery 110 can supply high-voltage current of about 300V or more. For example, the battery 110 could be a collection of lithium-ion cells supplying a voltage of 330V. The battery 110 can be charged by being plugged into a commercial power source, and can supply power to the driving motor 145 and other devices while being discharged.

The battery management unit 120 can determine the state of charge (SOC) of the battery 110, and can selectively manage the charging and discharging of the battery 110 according to control signals of the vehicle controller 190. For instance, the battery management unit may be a battery management system (BMS).

The power distribution unit (PDU) 130 can distribute the power supplied from the battery 110 to various components. For example, the power distribution unit 130 can supply power to the motor controller 140 for driving the vehicle, and can supply power to the refrigeration system 150 for maintaining the freshness of fresh food stored in the cargo compartment. In this instance, the vehicle controller 190 can control whether to supply power through the power distribution unit 130.

The driving motor 145 generates driving power for driving the vehicle using the power supplied from the battery 110, and can be controlled by the motor controller 140. The motor controller 140 may be, for example, a motor control unit (MCU) .

The refrigeration system 150 is designed to supply cold air within the cargo compartment of the electric truck, and includes a compressor 151, a condenser, an expansion valve, and an evaporator, which form a refrigeration cycle. The compressor 151 compresses refrigerant using power supplied from the battery 110. The condenser emits heat to convert the refrigerant in a gaseous state into a liquid state, the expansion valve performs the throttling action relative to the refrigerant, and the evaporator evaporates the refrigerant of the liquid state to absorb ambient heat. The refrigeration system 150 performs the four processes sequentially and continuously, and can absorb heat within the cargo compartment during the above process. In the present invention, as an example of components requiring power in the refrigeration system 150, the compressor 151 and a fan motor 153 of the condenser are proposed, but additional components may also be added if necessary.

In an embodiment, the refrigeration system 150 may be a high-voltage refrigeration system that directly uses the high-voltage of the battery 110. For instance, the compressor 151 and the fan motor 153 of the refrigeration system 150 can be operated at high-voltage of 330V. In this case, since there is no need to convert the high-voltage of the battery 110 into low-voltage, thereby preventing energy loss that could occur during the voltage conversion process. According to experiments conducted by the inventor of the present invention, compared to the conventional case that the battery voltage of 330V is converted into 12V or 24V and is supplied into the refrigeration system, it was confirmed that the energy loss rate was improved approximately 8% to 10% when the refrigeration system 150 is operated at a battery voltage of 330V.

Meanwhile, even though the refrigeration system 150 uses the high-voltage of the battery 110 directly, there are still numerous low-voltage devices 165 requiring low-voltage within the electric truck. For instance, the low-voltage devices 165 can include interior lights, headlamps, heated seats, ventilation seats, and various sensors. Since the low-voltage devices are operated at low-voltage ranging from 12V to 24V, the high-voltage of the battery 110 cannot be used as it is. Therefore, the low-voltage DC converter 160 converts the high-voltage current of the battery 110 into a low-voltage current to supply the low-voltage current to the low-voltage devices 165.

Specifically, the low-voltage DC converter 160 can switch and convert the high-voltage DC supplied from the battery 110 into AC, step up or step down the converted AC using a coil, a transformer, a capacitor, etc., and then rectify the AC back to low-voltage DC to supply power necessary for the low-voltage devices 165. For example, the low-voltage DC converter 160 may be a DC/DC converter.

The route guidance terminal 170 can receive destination information from the driver and provide the driver with route information for the destination. For example, the route information may include distance information to the destination, time information, travel route information, and traffic conditions, and the route guidance terminal 170 may be a smartphone, a tablet PC, a laptop, or a navigation system.

The sensor unit 180 can measure temperature and humidity inside the cargo compartment, and provide the measured results to the vehicle controller 190. For example, the sensor unit 180 may include a thermometer, a hygrometer, and the likes, and multiple sensor units may be installed as needed.

The vehicle controller 190 is the top-level controller that controls the operation of the vehicle, and can control the output torque of the driving motor 145 and the operation of the refrigeration system 150. For example, the vehicle controller 190 may be a vehicle control unit (VCU). Communication between the vehicle controller 190, which is a superordinate controller, and subordinate controllers is carried out via CAN communication, thereby allowing for the exchange of information and transmitting and receiving of control signals. Here, the subordinate controllers may include the battery management unit 120, the power distribution unit 130, the motor controller 140, the compressor 151, the fan motor 153, the low-voltage DC converter 160, the route guidance terminal 170, the sensor unit 180, etc.

In an embodiment, the vehicle controller 190 can control the operation of the refrigeration system 150 using the state information measured in the cargo compartment by the sensor unit 180. For example, if the temperature in the cargo compartment exceeds a preset upper limit temperature, power can be supplied to the refrigeration system 150 via the power distribution unit 130 to lower the temperature of the cargo compartment. Conversely, if the temperature in the cargo compartment falls below a preset lower limit temperature, the power supply to the refrigeration system 150 can be cut off.

Meanwhile, in the electric truck intended for transporting fresh food, it is crucial to transport the fresh food loaded in the cargo compartment to the destination in a fresh state. Therefore, it is necessary to control the electric truck by comprehensively comparing the driving power needed to reach the destination, the power needed to operate the refrigeration system 150, the charge level of the battery 110, etc. Hereinafter, referring to FIG. 2, a method for controlling the electric truck will be described in more detail.

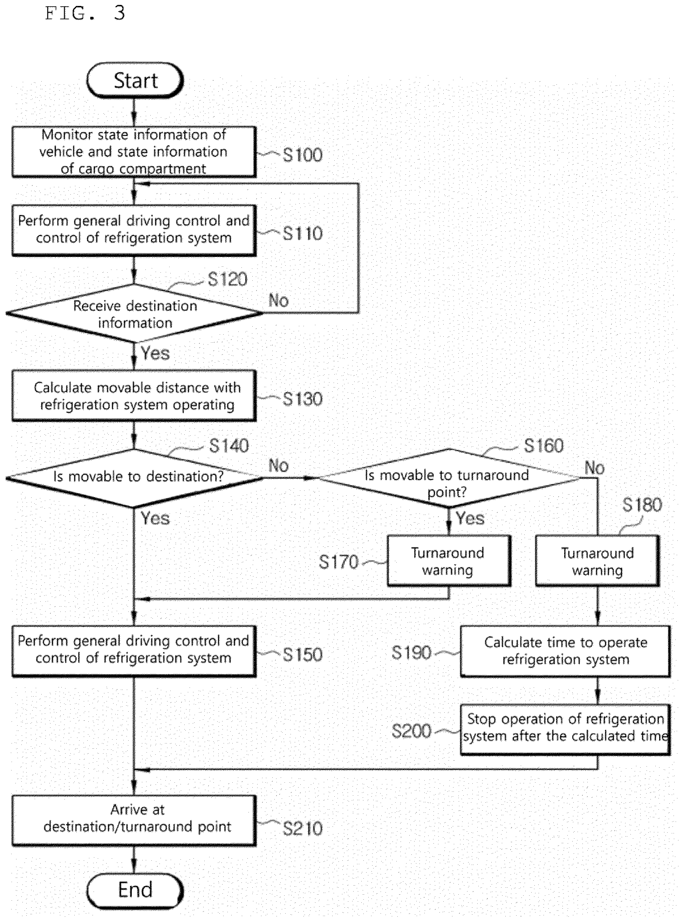

FIG. 3 is a flowchart for depicting a control method of an electric truck having a cold chain refrigeration system powered by a high-voltage driving battery according to the present invention.

Referring to Figure 3, the control method of an electric truck includes: monitoring the state information of the vehicle and the state information of the cargo compartment (S100); and performing general driving control and control of the refrigeration system 150 (S110).

Here, the state information of the vehicle may include driver's requested torque information, charge state information of the battery 110, and others, and the state information of the cargo compartment may include temperature information and humidity information of the cargo compartment. The charge state information of the battery 110 can be obtained from the battery management unit 120, and the state information of the cargo compartment can be obtained from the sensor unit 180.

The vehicle controller 190 controls the driving motor 145 using the state information of the vehicle, and can control the operation of the refrigeration system 150 using the state information of the cargo compartment. The above is the general driving control and the control of the refrigeration system.

Thereafter, once destination information is received (S120), the vehicle controller calculates the movable distance with the refrigeration system 150 operating (S130).

Specifically, when the driver inputs the transport destination through the route guidance terminal 170, the route guidance terminal 170 can receive departure information, destination information, distance information from the departure point to the destination, estimated travel time, travel route, and traffic condition information, and others from an external server (not illustrated). The received information can be provided to the vehicle controller 190.

The vehicle controller 190 can calculate the maximum distance that can be traveled in the state in which the refrigeration system 150 is operated, using the information received from the route guidance terminal 170, the battery charge state information received from the battery management unit 120, and the previously stored power requirement information for operating the refrigeration system 150.

The calculated maximum movable distance to move the electric truck in the state in which the refrigeration system 150 is operated is compared to the remaining distance to the destination (S140).

If it is possible to move the electric truck to the currently set destination while continuing the operation of the refrigeration system 150, the general driving control and the control of the refrigeration system are performed continuously (S150).

Conversely, if it is not possible to reach the set destination with the refrigeration system 150 operating, it is determined whether it is possible to travel to a turnaround point with the refrigeration system 150 operating (S160).

In this instance, the turnaround point may be a place previously set by the driver through the route guidance terminal 170, a previous destination set before the current destination, or the nearest charging station.

The vehicle controller 190 can determine whether it is possible to travel to the turnaround point with the refrigeration system 150 operating, using the departure information, turnaround point information, distance information from the departure point to the turnaround point, estimated travel time, travel route and traffic condition information, the charge state information of the battery 110, and previously stored power information necessary for operating the refrigeration system 150, and the like.

If it is possible to travel to the turnaround point with the refrigeration system 150 operating, a turnaround warning is provided to the driver (S170), and then, the general driving control and the control of the refrigeration system are performed continuously (S150). In this instance, the turnaround warning may send a warning message through the route guidance terminal 170 or send a warning signal to the driver through a lamp or an audio device installed in the vehicle.

Conversely, if it is not possible to move the electric truck from the current location to the turnaround point while continuing the operation of the refrigeration system 150, the turnaround warning is provided to the driver (S180), and the maximum operating time of the refrigeration system 150 during the travel to the turnaround point is calculated (S190).

Specifically, the vehicle controller 190 calculates the power needed to travel to the turnaround point using the departure information, the turnaround point information, the distance information from the departure point to the turnaround point, the estimated travel time, the travel route and traffic condition information, and the likes. Additionally, the vehicle controller 190 calculates time to operate the refrigeration system 150 by comparing the charge state information of the battery 110 with the calculated power required to travel to the turnaround point.

During the calculated time that the refrigeration system 150 can be operated, the general driving control and the control of the refrigeration system are performed continuously, and then, power supplied to the refrigeration system 150 is cut off (S200) . In other words, the refrigeration system 150 is operated as much as possible according to the state of charge (SOC) of the battery 110, and thereafter, the remaining power is used solely for driving the electric truck.

Meanwhile, if the state of charge (SOC) of the battery 110 is low, it may be necessary to drive for a long time to the turnaround point with the refrigeration system 150 turned off. In such a case, there is a risk of damage to the fresh food loaded in the cargo compartment. To prevent the risk, the vehicle controller 190 may repeatedly perform turning on and off the refrigeration system 150. That is, during the turnaround, the calculated time to operate the refrigeration system 150 is split to operate the refrigeration system 150 cyclically, thereby preventing damage to the fresh food in the cargo compartment.

As described above, the control method of an electric truck having a cold chain refrigeration system powered by a high-voltage driving battery according to the present invention can minimize power loss that may occur during the voltage transformation process by operating the refrigeration system 150 using the power of the high-voltage battery 110 as it is without a transformer. In addition, the control method of an electric truck having a cold chain refrigeration system powered by a high-voltage driving battery according to the present invention can organically control the driving of the vehicle and the operation of the refrigeration system 150 according to the distance to the destination and the state of charge of the battery 110, thereby stably controlling the electric truck having the cold chain refrigeration system operated by the single battery 110.

## Claims

1. A control method of an electric truck having a cold chain refrigeration system powered by a high-voltage driving battery, which simultaneously supplies power to a driving motor operating a vehicle and to a refrigeration system supplying cold air to a cargo compartment, comprising operations of:
monitoring state information of the vehicle and state information of the cargo compartment;
receiving destination information;
calculating a movable distance with the refrigeration system operating; and
selectively operating the refrigeration system by comparing the remaining distance to the destination with the calculated movable distance with the refrigeration system operating.

2. The control method according to claim 1, wherein the operation of selectively operating the refrigeration system includes:
continuously operating the refrigeration system if the remaining distance to the destination is less than the calculated movable distance with the refrigeration system operating.

3. The control method according to claim 2, wherein if the remaining distance to the destination is greater than the calculated movable distance with the refrigeration system operating, the operation of selectively operating the refrigeration system includes:
determining whether it is possible to travel to a preset turnaround point with the refrigeration system operating; and
displaying a turnaround warning to a driver if it is possible to travel to the turnaround point.

4. The control method according to claim 3, if it is impossible to travel to the turnaround point, further comprising operations of:
calculating the time to operate the refrigeration system during the travel to the turnaround point; and
stopping the operation of the refrigeration system after the calculated time has elapsed.

5. The control method according to claim 3, if it is impossible to travel to the turnaround point, further comprising operations of:
calculating the time to operate the refrigeration system during the travel to the turnaround point; and
repeating turning on and turning off the refrigeration system until arrival at the turnaround point.

6. The control method according to claim 3, wherein the turnaround point is any one among a place previously set by the driver through a route guidance terminal, a previous destination set before the current destination, and the nearest charging station.

7. The control method according to claim 1, wherein the operation of monitoring state information of the vehicle and state information of the cargo compartment includes:
acquiring driver's requested torque information and charge state information of the battery; and
acquiring temperature and humidity information of the cargo compartment.

8. The control method according to claim 1, wherein the operation of receiving destination information includes:
receiving departure information, destination information, distance information from the departure point to the destination, estimated travel time, travel route, and traffic condition information.

9. The control method according to claim 1, wherein the operation of selectively operating the refrigeration system includes:
supplying power at the same voltage to both the driving motor and the refrigeration system.

10. The control method according to claim 9, wherein the voltage supplied to the driving motor and the refrigeration system is 330V.
